# EUROPÄISCHE PATENTSCHRIFT

(11) **EP 2 929 678 B1**
(45) Veröffentlichungstag und Bekanntmachung des Hinweises auf die Patenterteilung: **28.06.2017**
(21) Anmeldenummer: 13798361.5
(22) Anmeldetag: 02.12.2013
(51) Int. Cl.: H04M 3/54

(54) **VERFAHREN ZUR KONFIGURATION VON ZIELRUFNUMMERNBEZOGENEN TELEFONIELEISTUNGSMERKMALEN EINES TELEKOMMUNIKATIONSNETZES, SYSTEM, COMPUTERPROGRAMM UND COMPUTERPROGRAMMPRODUKT**
METHOD FOR CONFIGURING DESTINATION-TELEPHONE-NUMBER-RELATED TELEPHONY SERVICE FEATURES OF A TELECOMMUNICATION NETWORK, SYSTEM, COMPUTER PROGRAM AND COMPUTER PROGRAM PRODUCT
PROCÉDÉ DE CONFIGURATION DE CARACTÉRISTIQUES DE PRESTATIONS TÉLÉPHONIQUES RELATIVES AU NUMÉRO D'APPEL CIBLE D'UN RÉSEAU DE TÉLÉCOMMUNICATION, SYSTÈME, PROGRAMME D'ORDINATEUR ET PRODUIT-PROGRAMME D'ORDINATEUR

(30) Priorität: 07.12.2012 DE 102012023906
(43) Veröffentlichungstag der Anmeldung: 14.10.2015
(73) Patentinhaber: Deutsche Telekom AG, 53113 Bonn (DE)
(72) Erfinder: STEPANEK, Nicolas, 64385 Reichelsheim (DE); ROHR, Alexander, 64287 Darmstadt (DE)
(74) Vertreter: Schwöbel, Thilo K.
(86) Internationale Anmeldenummer: PCT/EP2013/075275
(87) Internationale Veröffentlichungsnummer: WO 2014/086726

(56) Entgegenhaltungen:
- GB-A- 2 308 270
- US-A1- 2008 057 943
- US-A1- 2010 310 057

## Beschreibung

### Stand der Technik

Die Erfindung betrifft ein Verfahren zur Konfiguration einer zielrufnummernbezogenen Funktion, bzw. von zielrufnummernbezogenen Telefonieleistungsmerkmalen eines Telekommunikationsnetzes mittels einer Dienstverwaltungsschnittstelle des Telekommunikationsnetzes, wobei durch die zielrufnummernbezogene Funktion im Falle eines an eine Referenzrufnummer adressierten Rufs entweder eine Signalisierung außer an einem ersten, der Referenzrufnummer zugeordneten, Telekommunikationsendgerät zusätzlich und zeitlich parallel zur Signalisierung am ersten Telekommunikationsendgerät auch an wenigstens einem zweiten, einer Parallelrufnummer zugeordneten, Telekommunikationsendgerät signalisiert wird oder eine Signalisierung anstelle einer Signalisierung an einem ersten, der Referenzrufnummer zugeordneten, Telekommunikationsendgerät an wenigstens einem zweiten, der Parallelrufnummer zugeordneten, Telekommunikationsendgerät signalisiert wird. Beispiele für solche zielrufnummernbezogene Funktionen sind insbesondere die Anrufweiterschaltung und der Parallelruf.

Solche zielrufnummernbezogenen Funktionalitäten, wie die Parallelruf-Funktionalität, sind allgemein bekannt. Beispielsweise offenbart die Druckschrift WO 97/26748 A1 eine solche Parallelruf-Funktionalität. Ein weiteres Beispiel ist aus der Druckschrift US 2008/057943 A1 bekannt. Bisher war es jedoch zur Konfiguration einer solchen zielrufnummernbezogenen Funktionalität, etwa der Parallelruf-Funktionalität oder anderer Leistungsmerkmale des Telefoniedienstes wie z.B. der Anrufweiterschaltung, typischerweise notwendig, dass eine Benutzerinteraktion am ersten, der Referenzrufnummer zugeordneten, Telekommunikationsendgerät erfolgt, so dass im Zeitpunkt der Einrichtung der Parallelruf-Funktionalität auch ein Zugang zum ersten Telekommunikationsendgerät erforderlich ist.

Hierdurch ist es beim Stand der Technik in nachteiliger Weise notwendig, dass ein vergleichsweise großer Aufwand getrieben werden muss, um die Einrichtung bzw. die Aktivierung der zielrufnummernbezogenen Funktionalität an einem bestimmten Anschluss, d.h. an einer bestimmten Referenzrufnummer, vorzunehmen.

Eine typische Situation bezieht sich beispielsweise auf eine Konferenzsituation, bei der eine Telefonkonferenz zwischen verschiedenen Teilnehmern durchgeführt werden soll und zu der sich eine Mehrzahl von Personen in einem Besprechungsraum (mit einem separaten Telefonanschluss bzw. mit einer separaten Nebenstellennummer) einzufinden haben, darunter auch ein Ansprechpartner für einen externen Gesprächspartner, der an dem Telefongespräch teilnehmen soll. Falls der externe Gesprächspartner das Telefongespräch einleiten soll, ist es traditionellerweise erforderlich, dass die Nebenstellenrufnummer (bzw. allgemein die Rufnummer) des Telefonapparats im Besprechungszimmer an den externen Gesprächspartner übermittelt wird. Diese Nebenstellenrufnummer (bzw. allgemein die Rufnummer) des Telefonapparats im Besprechungszimmer ist jedoch teilweise im Vorhinein nicht bekannt (beispielsweise deshalb, weil sich die Verfügbarkeit und damit die Wahl des Besprechungszimmers ad hoc verändert). Es wäre daher eine Möglichkeit wünschenswert, ausschließlich ausgehend vom Besprechungszimmer - d.h. vom Gerät der Parallelrufnummer aus - die Parallelruf-Funktionalität einrichten zu können.

Hinzu kommt, dass die Konfiguration zeitlich vor der tatsächlichen Inanspruchsnahme des Leistungsmerkmals erfolgen muss, d.h. derjenige Nutzer, der eine entsprechende Situation in Anspruch nehmen möchte, muss dies im Voraus wissen, da die Benutzerinteraktion wie oben beschrieben im Vorfeld am ersten, der Referenzrufnummer zugeordneten, Telekommunikationsendgerät erfolgt. Tritt der Bedarf der Inanspruchnahme aber erst später ein, so ist die Konfiguration, d.h. eine Aktivierung, allein durch eine Handlung am zweiten Telekommunikationsendgerät nicht möglich. Da sich die Telekommunikationsgeräte oft an verschiedenen räumlich getrennten Orten befinden, kann die zielrufnummernbezogene Funktionalität entweder gar nicht oder nur mit sehr hohem Aufwand (z.B. durch Beauftragung dritter Personen zur Neukonfiguration, durch Überwindung der räumlichen Differenz und Neukonfiguration am ersten Telekommunikationsendgerät) in Anspruch genommen werden.

Im Zusammenhang mit der Konfigurationsänderung von Telekommunikationsendgeräten bzw. mit der Einrichtung von bestimmten Telefonfunktionalitäten ist es häufig notwendig, bestimmte Steuersequenzen bzw. Steuercodes (oftmals beginnend und/oder endend mit der Betätigung der Asterisk-Taste (sog. Sternchen-Taste *) oder mit der Doppelkreuz-Taste #) - insbesondere über eine Eingabevorrichtung wie etwa eine Tastatur oder einen berührungsempfindlichen Bildschirm, sog. Touch-Screen - einzugeben, um bestimmte Funktionalitäten zu aktivieren oder einzurichten.

Hierbei ist es häufig so, dass solche Funktionalitäten deshalb nicht verwendet werden, weil deren Einrichtung für einen relative großen Kreis potentieller Benutzer als zu umständlich aufgefasst wird, beispielsweise deshalb, weil die genaue Abfolge der Steuersequenz bzw. des Steuercodes erinnert werden muss oder aber eine Stelle eines Dokuments zur Hand sein muss, aus welchem die Steuersequenz bzw. der Steuercode hervorgeht. Es ist daher wünschenswert, zu einer Vereinfachung der Bedienbarkeit bzw. Aktivierbarkeit von bestimmten Funktionalitäten, dahingehend zu gelangen, dass durch die Vereinfachung der Aktivierung ein größerer Nutzerkreis von Benutzern der Funktionalität angesprochen werden kann.

### Offenbarung der Erfindung

Der Erfindung liegt die Aufgabe zugrunde, ein Verfahren bzw. ein System zur Konfiguration einer zielrufnummernbezogenen Funktionalität eines Telekommunikationsnetzes mittels einer Dienstverwaltungsschnittstelle des Telekommunikationsnetzes anzugeben, wobei durch die Parallelruf-Funktionalität im Falle eines an eine Referenzrufnummer adressierten Rufs entweder eine Signalisierung außer an einem ersten, der Referenzrufnummer zugeordneten, Telekommunikationsendgerät zusätzlich und zeitlich parallel zur Signalisierung am ersten Telekommunikationsendgerät auch an wenigstens einem zweiten, einer Parallelrufnummer zugeordneten, Telekommunikationsendgerät signalisiert wird oder eine Signalisierung anstelle einer Signalisierung an einem ersten, der Referenzrufnummer zugeordneten, Telekommunikationsendgerät an wenigstens einem zweiten, der Parallelrufnummer zugeordneten, Telekommunikationsendgerät signalisiert wird, und wobei in einfacher Weise eine sowohl intuitive als auch gegenüber Manipulationsversuchen abgesicherte Einrichtungsmöglichkeit für die Parallelruf-Funktionalität geschaffen wird.

Diese Aufgabe wird erfindungsgemäß gelöst durch ein Verfahren zur Konfiguration einer zielrufnummernbezogenen Funktionalität eines Telekommunikationsnetzes mittels einer Dienstverwaltungsschnittstelle des Telekommunikationsnetzes, wobei durch die Parallelruf-Funktionalität im Falle eines an eine Referenzrufnummer adressierten Rufs entweder eine Signalisierung außer an einem ersten, der Referenzrufnummer zugeordneten, Telekommunikationsendgerät zusätzlich und zeitlich parallel zur Signalisierung am ersten Telekommunikationsendgerät auch an wenigstens einem zweiten, einer Parallelrufnummer zugeordneten, Telekommunikationsendgerät signalisiert wird oder anstelle einer Signalisierung an einem ersten, der Referenzrufnummer zugeordneten, Telekommunikationsendgerät an wenigstens einem zweiten, der Parallelrufnummer zugeordneten, Telekommunikationsendgerät signalisiert wird, wobei eine Aktivierung der zielrufnummernbezogenen Funktionalität bezüglich des zweiten Telekommunikationsendgeräts und/oder bezüglich der Parallelrufnummer mittels eines Aktivierungsschritts dadurch erfolgt, dass der Dienstverwaltungsschnittstelle
-- die Referenzrufnummer,
-- die Parallelrufnummer und
-- eine Authentisierungsinformation
übermittelt wird.

Es ist hierdurch gemäß der vorliegenden Erfindung in vorteilhafter Weise möglich, dass ausschließlich der Dienstverwaltungsschnittstelle die jeweiligen Informationen zur Verfügung gestellt werden müssen. Es ist hierbei nicht erforderlich, vom ersten Telekommunikationsendgerät aus, d.h. von dem der Referenzrufnummer zugeordneten Telekommunikationsendgerät aus, die jeweiligen Informationen, d.h. die Referenzrufnummer, die Parallelrufnummer und die Authentisierungsinformation zu übermitteln.

Im Kontext der vorliegenden Erfindung wird von Zielrufnummer bzw. Referenzrufnummer gesprochen, d.h. die Telefonnummer, die ein eingehender Ruf adressiert, falls das erste Telekommunikationsendgerät erreicht werden soll. Erfindungsgemäß erfolgt
-- durch die zielrufnummernbezogene Funktionalität im Sinne einer Parallelruf-Funktionalität eine parallele Signalisierung (außer am ersten Telekommunikationsendgerät) auch (und zwar zeitlich zumindest teilweise parallel (d.h. gleichzeitig) zur Signalisierung am ersten Telekommunikationsendgerät) am zweiten Telekommunikationsendgerät, welches (an sich bzw. originär) der Parallelrufnummer zugeordnet ist, und
-- durch die zielrufnummernbezogene Funktionalität im Sinne einer Anrufweiterschaltung anstelle einer Signalisierung am ersten Telekommunikationsendgerät eine Signalisierung am zweiten Telekommunikationsendgerät, welches (an sich bzw. originär) der Parallelrufnummer zugeordnet ist.
Hierbei bedeutet "anstelle einer Signalisierung am ersten Telekommunikationsendgerät eine Signalisierung am zweiten Telekommunikationsendgerät", dass am zweiten Telekommunikationsendgerät eine Signalisierung (bzw. wenigstens ein Teil einer "Gesamtsignalisierung") signalisiert wird, die unter normalen Bedingungen (d.h. ohne die Anrufweiterschaltung) am ersten Telekommunikationsendgerät erfolgt wäre. Beispiele hierfür sind
-- die Rufumleitung bzw. die Anrufweiterschaltung mit Verzögerung (auch abgekürzt mit CFNR (für Call Forwarding on No Reply) erfolgt die Umleitung nur, wenn sich der Zielteilnehmer nach einer bestimmten Zeit (beispielsweise nach etwa 15 Sekunden) nicht meldet - "verzögerte Rufumleitung"): die Umleitung erfolgt erst nach einer gewissen Verzögerungszeit - während der die Signalisierung (bzw. der erste Teil der "Gesamtsignalisierung") am ersten (der Referenzrufnummer zugeordneten) Telekommunikationsendgerät erfolgt - am zweiten Telekommunikationsendgerät, d.h. anstelle einer Signalisierung am ersten Telekommunikationsendgerät erfolgt nach Ablauf der Verzögerungszeit eine Signalisierung ausschließlich am zweiten Telekommunikationsendgerät;
-- die Rufumleitung bzw. die Anrufweiterschaltung sofort (auch abgekürzt mit CFU (für Call Forwarding Unconditional): die Umleitung erfolgt in jedem Fall sofort - "sofortige Rufumleitung"), d.h. anstelle einer Signalisierung am ersten Telekommunikationsendgerät erfolgt (ausschließlich) eine Signalisierung am zweiten Telekommunikationsendgerät;
-- die Rufumleitung bzw. die Anrufweiterschaltung bei besetzt (auch abgekürzt mit CFB (für Call Forwarding Busy): die Umleitung bzw. Anrufweiterschaltung erfolgt falls die Referenzrufnummer (bzw. das erste Telekommunikationsendgerät) besetzt ist - "Anrufweiterschaltung bei Besetzt", d.h. anstelle einer Signalisierung am ersten Telekommunikationsendgerät erfolgt (ausschließlich) eine Signalisierung am zweiten Telekommunikationsendgerät (weil das erste Telekommunikationsendgerät besetzt ist).

Gemäß einer besonders bevorzugten Weiterbildung des erfindungsgemäßen Verfahrens gemäß der vorliegenden Erfindung ist es vorgesehen, dass zur Konfiguration der zielrufnummernbezogenen Funktionalitäten im Sinne einer Aktivierung der Parallelruf-Funktionalität oder der Anrufweiterschaltung bezüglich des zweiten Telekommunikationsendgeräts und/oder bezüglich der Parallelrufnummer - neben einer Befehlsinformation - genau die Referenzrufnummer, die Parallelrufnummer und die Authentisierungsinformation zur Dienstverwaltungsschnittstelle übertragen werden.

Hierdurch ist es erfindungsgemäß vorteilhaft möglich, dass die Aktivierung der zielrufnummernbezogenen Funktionalitäten (Parallelruf-Funktionalität oder die Konfiguration anderer Leistungsmerkmale) besonders einfach und schnell erfolgen kann. Damit können solche zielrufnummernbezogenen Funktionalitäten auch für vergleichsweise kurze Zeiträume eingerichtet werden bzw. es ist für einen größeren Kreis von potentiell einrichtenden Personen eine Einrichtunge bzw. Aktivierung der zielrufnummernbezogenen Funktionalitäten möglich.

Erfindungsgemäß ist es weiterhin besonders bevorzugt, dass die Aktivierung zielrufnummernbezogenen Funktionalität bezüglich des zweiten Telekommunikationsendgeräts bei der Dienstverwaltungsschnittstelle ausschließlich vom zweiten Telekommunikationsendgerät aus erfolgt.

Es ist hierdurch erfindungsgemäß in besonders vorteilhafter Weise möglich, dass keinerlei weitere Interaktion zur Aktivierung der zielrufnummernbezogenen Funktionalität am ersten Telekommunikationsendgerät (d.h. dem der Referenzrufnummer zugeordneten Telekommunikationsendgerät) erforderlich ist, sondern ausschließlich am zweiten Telekommunikationsendgerät, d.h. am der Parallelrufnummer zugeordneten Telekommunikationsendgerät.

Insbesondere ist es erfindungsgemäß bevorzugt vorgesehen, dass die Parallelrufnummer durch eine CLIP-Funktionalität (Übermittlung der Rufnummer/Rufnummernanzeige, Calling Line Identification Presentation) des zweiten Telekommunikationsendgeräts übertragen wird.

Dies wird in aller Regel, d.h. immer dann, wenn die CLIP-Funktionalität (Übermittlung der Rufnummer/Rufnummernanzeige, Calling Line Identification Presentation) des zweiten Telekommunikationsendgeräts aktiviert ist, automatisch erfolgen, ohne dass der Benutzer des zweiten Telekommunikationsendgeräts bzw. der Parallelrufnummer eine weitere Eingaben oder andere Einstellungen am zweiten Telekommunikationsendgerät vornehmen muss. Hierdurch ist es erfindungsgemäß möglich, die Aktivierung der zielrufnummernbezogenen Funktionalität weiter zu vereinfachen und damit einem größeren Kreis von Benutzern zugänglich zu machen. Ein Benutzer, der die Aktivierung der zielrufnummernbezogenen Funktionalität am zweiten Telekommunikationsendgerät, d.h. mit der der Parallelrufnummer vornehmen möchte, muss daher lediglich die Referenzrufnummer und die Authentisierungsinformation eingeben.

Erfindungsgemäß wird diese Eingabe während des Aktivierungsschritts der vorliegenden Erfindung bevorzugt über ein Sprachdialogsystem (auch als sogenanntes IVR-System (Interactive Voice Response) bezeichnet) vorgenommen. Es wird also beispielsweise vom zweiten Telekommunikationsendgerät aus (d.h. vom der Parallelrufnummer zugeordneten Telekommunikationsendgerät)
-- zunächst die Aktivierung der zielrufnummernbezogenen Funktionalität (d.h. insbesondere der Parallelruf-Funktionalität oder die Aktivierung anderer Leistungsmerkmale) durch Auswahl einer Dienstrufnummer angestoßen oder aber es wird eine Dienstrufnummer angewählt und nachfolgend die Aktivierung der zielrufnummernbezogenen Funktionalität (Parallelruf-Funktionalität oder andere Leistungsmerkmale) entweder angefordert oder aber die Aktivierung der zielrufnummernbezogenen Funktionalität (Parallelruf-Funktionalität oder andere Leistungsmerkmale) bestätigt (beispielsweise etwa durch bejahen der Ansage "Wollen Sie eine Parallelruf-Funktionalität (bzw. Anrufweiterschaltung) für diese Telefonnummer (d.h. die Parallelrufnummer) einrichten?"), was der Übermittlung einer Befehlsinformation entspricht,
-- anschließend wird - insbesondere nach Aufforderung über ein mit der Dienstrufnummer verbundenen Sprachdialogsystem - die Referenzrufnummer eingegeben (beispielsweise mittels einer Spracheingabe oder aber mittels einer Eingabe über eine Eingabeeinrichtung wie etwa eine Telefontastatur oder einen berührungsempfindlichen Bildschirm) und
-- ferner wird die Authentisierungsinformation - insbesondere ebenfalls nach Aufforderung über ein mit der Dienstrufnummer verbundenen Sprachdialogsystem - eingegeben.

Die Einrichtung der zielrufnummernbezogenen Funktionalität (Parallelruf-Funktionalität oder andere Leistungsmerkmale) wird in einem weiteren optionalen Schritt dem einrichtenden Benutzer durch beispielsweise eine Ansage bestätigt. Dies ist lediglich dann der Fall, wenn in der Dienstverwaltungsschnittstelle die erfasste Authentisierungsinformation als zur erfassten Referenzrufnummer zugehörig erkannt wurde.

Die Zuordnung der Authentisierungsinformation zur Referenzrufnummer erfolgt erfindungsgemäß in einem der Einrichtung der Parallelruf-Funktionalität am zweiten Telekommunikationsendgerät zeitlich vorgelagerten Schritt.

Hierzu ist es erfindungsgemäß bevorzugt vorgesehen, dass zeitlich vor der Durchführung des Aktivierungsschritts mittels eines Vorbereitungsschritts die Aktivierbarkeit der zielrufnummernbezogenen Funktionalität bezüglich der Referenzrufnummer eingerichtet wird, wobei während des Vorbereitungsschritts die Authentisierungsinformation mittels der Dienstverwaltungsschnittstelle generiert wird.

Hierdurch ist es erfindungsgemäß in besonders vorteilhafter Weise möglich, dass eine Referenzrufnummer für die zielrufnummernbezogenen Funktionalität dadurch freigegeben bzw. geöffnet wird, dass ein entsprechend berechtigter Benutzer der Referenzrufnummer bzw. des ersten (der Referenzrufnummer zugeordneten) Telekommunikationsendgeräts die Einrichtbarkeit bzw. die Aktivierbarkeit der zielrufnummernbezogenen Funktionalität anstößt, etwa dadurch, dass eine entsprechende Information in einer der Dienstverwaltungsschnittstelle zugeordneten Speichereinheit hinterlegt wird. Erfindungsgemäß ist es in diesem Zusammenhang vorgesehen, dass die Authentisierungsinformation generiert wird bzw. zumindest dem Benutzer übermittelt wird, wenn die Einrichtbarkeit bzw. die Aktivierbarkeit der zielrufnummernbezogenen Funktionalität (bezüglich der Referenzrufnummer) initiiert wird.

Erfindungsgemäß ist es besonders bevorzugt vorgesehen, dass der Vorbereitungsschritt
-- mittels des ersten Telekommunikationsendgeräts erfolgt oder
-- mittels einer Datenverbindung zur Dienstverwaltungsschnittstelle zur Konfiguration der zielrufnummernbezogenen Funktionalität erfolgt.
Hierdurch ist es erfindungsgemäß in vorteilhafter Weise möglich, dass ein Benutzer umfangreiche Möglichkeiten zur Vornahme des Vorbereitungsschritts, d.h. zur Einrichtbarkeit bzw. Aktivierbarkeit der zielrufnummernbezogenen Funktionalität (bezüglich der Referenzrufnummer), hat. Beispiele hierfür umfassen etwa die Einstellung der entsprechenden Funktionalität in einem Einstellungsmenü einer Verwaltungs- und Konfigurationsoberfläche der Dienstverwaltungsschnittstelle, wobei die Verwaltungs- und Konfigurationsoberfläche über externes Datengerät etwa einen Rechner (oder auch einer Anwendung eines multifunktionalen Mobiltelefons (sog. Smartphone-App)) zu Konfigurationszwecken angesprochen wird oder auch die Einstellung der entsprechenden Funktionalität über das erste Telekommunikationsendgerät selbst, beispielsweise über eine Dienstrufnummer.

Gemäß einer weiteren bevorzugten Ausführungsform der vorliegenden Erfindung ist es beim erfindungsgemäßen Verfahren vorgesehen, dass eine Deaktivierung der zielrufnummernbezogenen Funktionalität oder die Re-Konfiguration der zielrufnummernbezogenen Funktionalität (Parallelruf-Funktionalität oder andere Leistungsmerkmale) bezüglich einerseits der Referenzrufnummer und bezüglich andererseits des zweiten Telekommunikationsendgeräts und/oder der Parallelrufnummer mittels eines Deaktivierungsschritts dadurch erfolgt, dass der Dienstverwaltungsschnittstelle
-- die Referenzrufnummer und
-- eine Authentisierungsinformation
übermittelt wird.

Hierdurch ist es erfindungsgemäß vorteilhaft möglich, dass der Benutzer des ersten Telekommunikationsendgeräts, d.h. der Benutzer, dem typischerweise die Referenzrufnummer zugeordnet ist, die Möglichkeit erhält, die Aktivierung der zielrufnummernbezogenen Funktionalität auch wieder zur revidieren bzw. die zielrufnummernbezogenen Funktionalität für die Referenzrufnummer vollständig oder auch partiell auszuschalten.

Dies ist insbesondere für solche Situationen vorteilhaft, bei den der Verdacht besteht, dass die Einrichtung bzw. Aktivierung der zielrufnummernbezogenen Funktionalität für eine Mehrzahl von Parallelrufnummern (bzw. für eine Mehrzahl von zweiten Telekommunikationsendgeräten) in einer Weise erfolgt ist, die nicht oder nicht mehr den Wünschen des Benutzers der Referenzrufnummer (bzw. des ersten Telekommunikationsendgeräts) entspricht. Erfindungsgemäß ist es daher in vorteilhafter Weise vorgesehen, dass eine Deaktivierung der zielrufnummernbezogenen Funktionalität oder die Re-Konfiguration der zielrufnummernbezogenen Funktionalität (Parallelruf-Funktionalität oder andere Leistungsmerkmale) (ausgehend vom ersten Telekommunikationsendgerät aus oder auch ausgehend von einer Datenverbindung zur Dienstverwaltungsschnittstelle zur Konfiguration der zielrufnummernbezogenen Funktionalität) dadurch erfolgen kann, dass die zielrufnummernbezogenen Funktionalität für die Referenzrufnummer vollständig ausgeschaltet bzw. deaktiviert wird (d.h. für alle zweiten Telekommunikationsendgeräte bzw. die für Mehrzahl von zweiten Telekommunikationsendgeräte bzw. die Mehrzahl von Parallelrufnummern, für welche die zielrufnummernbezogene Funktionalität mit Bezug auf die Referenzrufnummer eingerichtet wurde) oder aber es kann eine Deaktivierung der zielrufnummernbezogenen Funktionalität dadurch erfolgen, dass die zielrufnummernbezogene Funktionalität für die Referenzrufnummer zwar nicht vollständig ausgeschaltet bzw. deaktiviert wird, aber doch für eine Parallelrufnummer (oder eine Mehrzahl Parallelrufnummern), für die die zielrufnummernbezogene Funktionalität eingerichtet war, deaktiviert wird. In diesem Fall ist neben der Angabe der Referenzrufnummer auch die Angabe der entsprechenden Parallelrufnummer (bzw. der Mehrzahl der entsprechenden Parallelrufnummern) für die (partielle) Deaktivierung der zielrufnummernbezogenen Funktionalität erforderlich.

Ein weiterer Gegenstand der vorliegenden Erfindung betrifft ein System zur Konfiguration einer zielrufnummernbezogenen Funktionalität (insbesondere der Parallelruf-Funktionalität bzw zur Konfiguration anderer Leistungsmerkmale) eines Telekommunikationsnetzes mittels einer Dienstverwaltungsschnittstelle des Telekommunikationsnetzes,
wobei das System derart konfiguriert ist, dass durch die zielrufnummernbezogene Funktionalität im Falle eines an eine Referenzrufnummer des Telekommunikationsnetzes adressierten Rufs entweder eine Signalisierung außer an einem ersten, der Referenzrufnummer zugeordneten, Telekommunikationsendgerät zusätzlich und zeitlich parallel zur Signalisierung am ersten Telekommunikationsendgerät auch an wenigstens einem zweiten, einer Parallelrufnummer zugeordneten, Telekommunikationsendgerät signalisiert wird oder eine Signalisierung anstelle einer Signalisierung an einem ersten, der Referenzrufnummer zugeordneten, Telekommunikationsendgerät an wenigstens einem zweiten, der Parallelrufnummer zugeordneten, Telekommunikationsendgerät signalisiert wird,
wobei das System derart konfiguriert ist, dass eine Aktivierung der zielrufnummernbezogenen Funktionalität bezüglich des zweiten Telekommunikationsendgeräts und/oder bezüglich der Parallelrufnummer mittels eines Aktivierungsschritts dadurch erfolgt, dass der Dienstverwaltungsschnittstelle
-- die Referenzrufnummer,
-- die Parallelrufnummer und
-- eine Authentisierungsinformation
übermittelt wird.

Mittels eines solchen Systems ist es erfindungsgemäß in vorteilhafter Weise möglich, dass eine einfache, schnelle und auch für technisch nicht sonderlich versierte Benutzer einfach durchführbare Konfiguration der zielrufnummernbezogenen Funktionalität möglich ist.

Erfindungsgemäß ist es besonders bevorzugt, dass das System derart konfiguriert ist, dass zur Aktivierung der zielrufnummernbezogenen Funktionalität bezüglich des zweiten Telekommunikationsendgeräts und/oder bezüglich der Parallelrufnummer - neben einer Befehlsinformation - genau die Referenzrufnummer, die Parallelrufnummer und die Authentisierungsinformation zur Dienstverwaltungsschnittstelle übertragen werden.

Ferner ist es auch bezüglich des Systems erfindungsgemäß bevorzugt, dass die Aktivierung der zielrufnummernbezogenen Funktionalität bezüglich des zweiten Telekommunikationsendgeräts bei der Dienstverwaltungsschnittstelle ausschließlich vom zweiten Telekommunikationsendgerät aus erfolgt.

Ferner ist es weiterhin auch bevorzugt, dass der Aktivierungsschritt mittels des zweiten Telekommunikationsendgeräts und über ein Sprachdialogsystem (IVR, Interactive Voice Response System) durchgeführt wird.

Erfindungsgemäß ist es bezüglich des Systems zur Konfiguration der Telefonieleistungsmerkmale ferner bevorzugt, dass zeitlich vor der Durchführung des Aktivierungsschritts mittels eines Vorbereitungsschritts die Aktivierbarkeit der zielrufnummernbezogenen Funktionalität bezüglich der Referenzrufnummer eingerichtet wird, wobei während des Vorbereitungsschritts die Authentisierungsinformation mittels der Dienstverwaltungsschnittstelle generiert wird.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einer programmierbaren Einrichtung, insbesondere auf einem Netzelement des Telekommunikationsnetzes, ausgeführt wird.

Weiterhin ist Gegenstand der vorliegenden Erfindung ein Computerprogrammprodukt mit einem computerlesbaren Medium und einen auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer programmierbaren Einrichtung, insbesondere auf einem Netzelement des Telekommunikationsnetzes, ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt schematisch ein Ausführungsbeispiel eines erfindungsgemäßen Systems.
- **Figur 2**: zeigt schematisch ein Ausführungsbeispiel eines Kommunikationsdiagramms zur Darstellung des erfindungsgemäßen Verfahrens.

### Ausführungsformen der Erfindung

Die vorliegende Erfindung wird mit Bezug auf besondere Ausführungen und mit Bezug zu den beiliegenden Zeichnungen beschrieben, wobei jedoch die Erfindung nicht auf diese Ausführungen und auf diese Zeichnungen beschränkt ist, sondern durch die Patentansprüche bestimmt ist. Die Zeichnungen sind nicht beschränkend zu interpretieren. In den Zeichnungen können zu Darstellungszwecken bestimmte Elemente vergrößert bzw. übertrieben sowie nicht maßstabsgerecht dargestellt sein.

Falls nichts anderes spezifisch angegeben wird, umfasst die Verwendung eines unbestimmten oder bestimmten Artikels mit Bezug auf ein Wort in der Einzahl, beispielsweise "ein", "eine", "eines", "der", "die", "das", auch die Mehrzahl eines solchen Wortes. Die Bezeichnungen "erster", "erste", "erstes", "zweiter", "zweite", "zweites" und so fort in der Beschreibung und in den Ansprüchen werden zur Unterscheidung zwischen ähnlichen oder zu unterscheidenden gleichen Elementen verwendet und nicht zwingend zur Beschreibung einer zeitlichen oder sonstigen Abfolge. Die derart benutzten Begriffe sind grundsätzlich als unter entsprechenden Bedingungen austauschbar anzusehen.

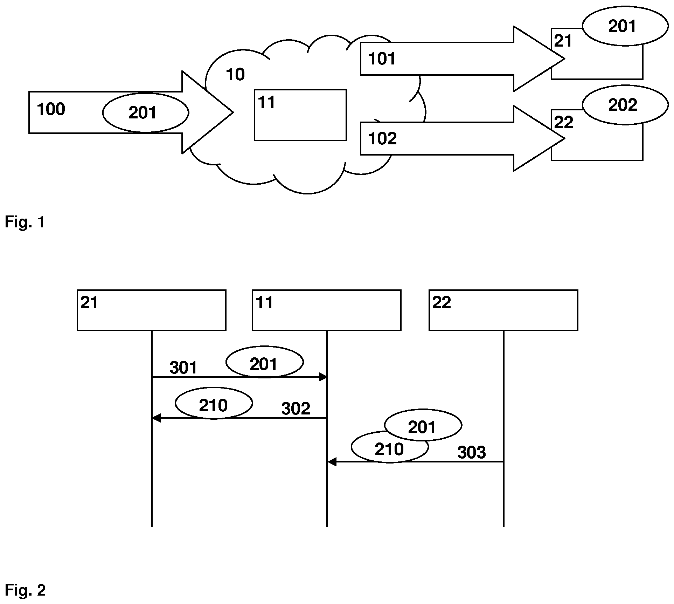

In Figur 1 ist ein schematisches Ausführungsbeispiel eines erfindungsgemäßen Systems dargestellt. Eine Mehrzahl von Telekommunikationsendgeräten 21, 22 sind an ein Telekommunikationsnetz 10 angeschlossen. Einem ersten Telekommunikationsendgerät 21 ist hierbei eine erste Rufnummer 201 zugeordnet, im Folgenden auch als Referenzrufnummer 201 bezeichnet. Einem zweiten Telekommunikationsendgerät 22 ist hierbei eine zweite Rufnummer 202 zugeordnet, im Folgenden auch als Parallelrufnummer 202 bezeichnet. Das Telekommunikationsnetz 10 weist eine Dienstverwaltungsschnittstelle 11 auf, mittels der eine Konfiguration bzw. eine Verwaltung von Telefonanschlüssen möglich ist. Bei dem ersten Telekommunikationsendgerät 21 bzw. der ersten Rufnummer / Referenzrufnummer 201 kann es sich gemäß einer bevorzugten Ausführungsform um eine Festnetzrufnummer bzw. um ein Festnetztelekommunikationsendgerät handeln und bei dem zweiten Telekommunikationsendgerät 22 bzw. der zweiten Rufnummer / Parallelrufnummer 202 um eine Mobilnetznummer bzw. um ein Mobilfunktelekommunikationsendgerät. Alternativ dazu kann es sich bei dem ersten Telekommunikationsendgerät 21 bzw. der ersten Rufnummer / Referenzrufnummer 201 gemäß einer bevorzugten Ausführungsform um eine Mobilnetznummer bzw. um ein Mobilfunktelekommunikationsendgerät und bei dem zweiten Telekommunikationsendgerät 22 bzw. der zweiten Rufnummer /

Parallelrufnummer 202 um eine Festnetzrufnummer bzw. um ein Festnetztelekommunikationsendgerät handeln.

Für den Fall dass ein eingehender, an die Referenzrufnummer 201 adressierter Ruf 100, insbesondere ein Telefonanruf, beim Telekommunikationsnetz 10 eingeht, wird typischerweise der eingehende Ruf 100 beim ersten Telekommunikationsendgerät 21 signalisiert, beispielsweise mithilfe eines Klingeltons oder dergleichen akustischer und/oder optischer und/oder haptischer (Vibrationsalarm) Signalisierung. Dies ist in Figur 1 mittels des Bezugszeichens 101 schematisch dargestellt.

Gemäß der erfindungsgemäßen zielrufnummernbezogenen Funktionalität im Sinne einer Parallelruf-Funktionalität ist es nun vorgesehen, dass parallel zur Signalisierung des eingehenden Rufs 100 beim ersten Telekommunikationsendgerät 21 (Signalisierung 101) auch eine Signalisierung des eingehenden Rufs 100 beim zweiten Telekommunikationsendgerät 22 erfolgt.

Gemäß der erfindungsgemäßen zielrufnummernbezogenen Funktionalität im Sinne einer Anrufweiterschaltung ist es vorgesehen, dass (zumindest teilweise) anstelle zur Signalisierung des eingehenden Rufs 100 beim ersten Telekommunikationsendgerät 21 (Signalisierung 101) eine Signalisierung des eingehenden Rufs 100 beim zweiten Telekommunikationsendgerät 22 erfolgt.

Die Signalisierung am zweiten Telekommunikationsendgerät 22 parallel (d.h. gleichzeitig) oder auch anstelle zur Signalisierung am ersten Telekommunikationsendgerät 21 ist in Figur 1 mittels des Bezugszeichens 102 schematisch dargestellt. Die Signalisierung 102 beim zweiten Telekommunikationsendgerät 22 kann sich dabei von der voreingestellten Signalisierung beim ersten Telekommunikationsendgerät 21 unterscheiden(oder auch nicht), beispielsweise deshalb, weil beim zweiten Telekommunikationsendgerät 22 (standardmäßig, d.h. generell bei jedem Anruf oder einer Untermenge von Anrufen) ein anderer Klingelton eingestellt ist als beim ersten Telekommunikationsendgerät 21. Neben dieser Unterscheidung zwischen der Signalisierung (des eingehenden Rufs 100) beim ersten Telekommunikationsendgerät 21 und beim zweiten Telekommunikationsendgerät 22 ist es erfindungsgemäß alternativ möglich, dass beim zweiten Telekommunikationsendgerät 22 die Signalisierung 102 (des an die Referenzrufnummer 201 adressierten Rufs 100) derart erfolgt, dass sich die Signalisierung (des an die Referenzrufnummer 201 adressierten Rufs 100) von einer normalen Signalisierung am zweiten Telekommunikationsendgerät 22 (d.h. einer Signalisierung eines (originär) an die Parallelrufnummer 202 adressierten Rufs) unterscheidet oder auch nicht. Falls sich diese beiden Signalisierungen unterscheiden, ist es für einen Benutzer des zweiten Telekommunikationsendgerät 22 möglich, anhand der Signalisierung zu erkennen, dass es sich bei der Signalisierung um einen Parallelruf eines eigentlich an die Referenzrufnummer 201 adressierten Rufs 100 handelt; falls sich alternativ hierzu diese beiden Signalisierungen jedoch nicht unterscheiden, ist wird der Parallelruf bzw. die Anrufweiterschaltung für einen Benutzer des zweiten Telekommunikationsendgeräts 22 genauso signalisiert wie ein originär an das zweite Telekommunikationsendgerät 22 adressierter Ruf.

In Figur 2 ist schematisch ein Ausführungsbeispiel eines Kommunikationsdiagramms zur Darstellung des erfindungsgemäßen Verfahrens dargestellt.

In einem ersten Schritt zur Konfiguration der zielrufnummernbezogenen Funktionalität des Telekommunikationsnetzes 10 - nachfolgend auch als der Vorbereitungsschritt bezeichnet - wird beispielsweise vom ersten Telekommunikationsendgerät 21 aus mittels einer ersten Nachricht 301 an die Dienstverwaltungsschnittstelle 11 die Information übertragen, dass zu der Referenzrufnummer 201 die zielrufnummernbezogene Funktionalität eingerichtet werden soll.

Mittels einer zweiten Nachricht 302 wird von der Dienstverwaltungsschnittstelle 11 die Information an beispielsweise das erste Telekommunikationsendgerät 21 übermittelt, dass die zielrufnummernbezogene Funktionalität eingerichtet ist, mithin der Vorbereitungsschritt abgeschlossen ist. Hierbei überträgt das Telekommunikationsnetz 10 (insbesondere in Form bzw. mittels der Dienstverwaltungsschnittstelle 11) auch die Authentisierungsinformation 210 an beispielsweise das erste Telekommunikationsendgerät 21.

Bei der Authentisierungsinformation 210 handelt es sich erfindungsgemäß beispielsweise um eine PIN-Information, d.h. eine sogenannte persönliche Identifizierungsinformation (personal identification number). Bei der Authentisierungsinformation 210 kann es sich beispielsweise um eine zweistellige oder eine dreistellige oder eine vierstellige oder eine fünfstellige oder eine sechsstellige oder eine siebenstellige oder eine achtstellige Zahl oder auch um eine zweistellige oder eine dreistellige oder eine vierstellige oder eine fünfstellige oder eine sechsstellige oder eine siebenstellige oder eine achtstellige alphanumerische Zeichenkette handeln.

Mittels der Authentisierungsinformation 210 ist es erfindungsgemäß vorteilhaft möglich, dass eine vertrauenswürdige Verbindung zwischen der Referenzrufnummer 201 und der Möglichkeit der Einrichtung der zielrufnummernbezogenen Funktionalität hergestellt wird. Für ein beliebiges zweites Telekommunikationsendgerät 22, welches mit dem Telekommunikationsnetz 10 verbunden ist bzw. verbindbar ist und welches normalerweise über seine Parallelrufnummer 202 erreichbar ist, kann die zielrufnummernbezogene Funktionalität gemäß einer bevorzugten Ausführungsform der vorliegenden Erfindung lediglich dann (allein vom zweiten Telekommunikationsendgerät 22 aus) eingerichtet werden, wenn auch der einrichtenden Person auch die Authentisierungsinformation 210 zur Verfügung steht. Dies stellt eine Absicherung gegen eine unbeschränkte und (seitens des Teilnehmeranschlussinhabers der Referenzrufnummer 201) nicht mehr kontrollierbare Vervielfältigung der Einrichtung der zielrufnummernbezogenen Funktionalität an eine Mehrzahl von zweiten Telekommunikationsendgeräten 22 dar.

Gemäß einer mit Blick auf die Figur 2 alternativen Ausführungsform der vorliegenden Erfindung ist es erfindungsgemäß auch möglich, dass der Austausch der ersten und zweiten Nachricht 301, 302 nicht zwischen dem ersten Telekommunikationsendgerät 21 und der Dienstverwaltungsschnittstelle 11, sondern zwischen einem externen Datengerät, etwa einen Rechner zu Konfigurationszwecken, und der Dienstverwaltungsschnittstelle 11 ausgetauscht wird. Das erfindungsgemäße Prinzip bleibt jedoch bestehen: Mittels der ersten Nachricht 301 wird der Dienstverwaltungsschnittstelle 11 (mittels eines Geräts, etwa dem ersten Telekommunikationsendgerät 21 oder auch mittels eines zu Konfigurationszwecken mit der Dienstverwaltungsschnittstelle 11 verbundenen Rechners) der Wunsch übermittelt, zur Referenzrufnummer 201 möge eine Parallelruf-Funktionalität eingerichtet werden; mittels der zweiten Nachricht 302 wird entweder nur dem nachfragenden Gerät oder nur einem anderen Gerät (wie beispielsweise nur dem ersten Telekommunikationsendgerät 21) oder auch sowohl dem anfragenden Gerät als auch dem ersten Telekommunikationsendgerät 22 mittels der zweiten Nachricht 302 die Authentisierungsinformation 210 übermittelt. Typischerweise wird hierbei die Authentisierungsinformation 210 nach dem Empfang der ersten Nachricht 301 durch die Dienstverwaltungsschnittstelle 11 generiert; alternativ hierzu ist es erfindungsgemäß jedoch auch möglich, dass die Authentisierungsinformation 210 bereits vor dem Empfang der ersten Nachricht 301 bei der Dienstverwaltungsschnittstelle 11 generiert ist und lediglich mittels der zweiten Nachricht 302 übermittelt wird.

In einem zweiten Schritt zur Konfiguration der Parallelruf-Funktionalität des Telekommunikationsnetzes 10 - nachfolgend auch als der Aktivierungsschritt bezeichnet -wird beispielsweise vom zweiten Telekommunikationsendgerät 22 aus mittels einer dritten Nachricht 303 an die Dienstverwaltungsschnittstelle 11 die Information übertragen, dass die (zu der Referenzrufnummer 201 mittels des Vorbereitungsschritts vorher bereits eingerichtete zielrufnummernbezogene Funktionalität) für die Parallelrufnummer 202 bzw. für das zweiten Telekommunikationsendgerät 22 aktiviert werden soll. Hierzu ist es erfindungsgemäß erforderlich, dass die Referenzrufnummer 201, die Parallelrufnummer 202 und die Authentisierungsinformation 210 zur Dienstverwaltungsschnittstelle 11 übertragen werden. Typischerweise erfolgt die Übertragung der Parallelrufnummer 202 dadurch, dass am zweiten Telekommunikationsendgerät 22 die CLIP-Funktionalität (Übermittlung der Rufnummer/Rufnummernanzeige, Calling Line Identification Presentation) aktiviert ist, d.h. die (normale bzw. originäre) Rufnummer des zweiten Telekommunikationsendgerät 22 wird als Parallelrufnummer 202 beim Anruf des zweiten Telekommunikationsendgeräts 22 bei der Dienstverwaltungsschnittstelle 11, insbesondere einer Dienstrufnummer, übertragen. Die Übertragung der weiteren Informationen, nämlich der Referenzrufnummer 201 und der Authentisierungsinformation 210 erfolgt erfindungsgemäß beispielsweise über ein Sprachdialogsystem (IVR, Interactive Voice Response System). Erfindungsgemäß ist es besonders vorteilhaft vorgesehen, dass zur Konfiguration der Parallelruf-Funktionalität im Sinne einer Aktivierung der zielrufnummernbezogenen Funktionalität bezüglich des zweiten Telekommunikationsendgeräts 22 und/oder bezüglich der Parallelrufnummer - neben einer Befehlsinformation, insbesondere durch die Auswahl der Dienstrufnummer zur Einrichtung bzw. zur Aktivierung der zielrufnummernbezogenen Funktionalität - genau die Referenzrufnummer 201, die Parallelrufnummer 202 und die Authentisierungsinformation 210 zur Dienstverwaltungsschnittstelle 11 übertragen werden. Hierdurch ist es besonders einfach und intuitiv möglich, die zielrufnummernbezogene Funktionalität für die Parallelrufnummer 202 einzurichten; dies insbesondere auch für technisch weniger versierte Benutzer.

Erfindungsgemäß ist es gemäß einer besonders bevorzugten Ausführungsform auch vorgesehen, dass eine Deaktivierung der zielrufnummernbezogenen Funktionalität bezüglich einerseits der Referenzrufnummer 201 und bezüglich andererseits des zweiten Telekommunikationsendgeräts 22 und/oder der Parallelrufnummer 202 mittels eines Deaktivierungsschritts erfolgt. Hierzu wird gemäß dieser Ausführungsform der Dienstverwaltungsschnittstelle 11 wenigstens die Referenzrufnummer 201 und die Authentisierungsinformation, zusammen typischerweise mit einer Befehlsinformation zur Deaktivierung der zielrufnummernbezogenen Funktionalität übermittelt. Bei dieser Ausführungsform ist es vorteilhaft möglich, dass der Benutzer des ersten Telekommunikationsendgeräts 21, d.h. der Benutzer, dem typischerweise die Referenzrufnummer 201 zugeordnet ist, die Möglichkeit erhält, die Aktivierung der zielrufnummernbezogenen Funktionalität (nach deren Bereitstellung mittels des Vorbereitungsschritts und deren Aktivierung bezüglich einer Parallelrufnummer bzw. einer Mehrzahl von Parallelrufnummern) auch wieder zu deaktivieren bzw. die zielrufnummernbezogenen Funktionalität für die Referenzrufnummer vollständig oder auch partiell auszuschalten. In Situationen, bei denen der Verdacht besteht, dass die Einrichtung bzw. Aktivierung der zielrufnummernbezogenen Funktionalität für eine Mehrzahl von Parallelrufnummern 202 (bzw. für eine Mehrzahl von zweiten Telekommunikationsendgeräten 22) in einer Weise erfolgt ist, die nicht oder nicht mehr den Wünschen des Benutzers der Referenzrufnummer 201 (bzw. des ersten Telekommunikationsendgeräts 21) entspricht, ermöglicht die vollständige oder partielle Deaktivierung der zielrufnummernbezogenen Funktionalität eine Bereinigung der über die Parallelruf-Funktionalität parallel angerufenen Telekommunikationsendgeräte.

## Patentansprüche

1. Verfahren zur Konfiguration einer zielrufnummernbezogenen Funktionalität eines Telekommunikationsnetzes (10) mittels einer Dienstverwaltungsschnittstelle (11) des Telekommunikationsnetzes (10),
wobei durch die zielrufnummernbezogene Funktionalität im Falle eines an eine Referenzrufnummer (201) adressierten Rufs (100)
-- entweder eine Signalisierung außer an einem ersten, der Referenzrufnummer (201) zugeordneten, Telekommunikationsendgerät (21) zusätzlich und zeitlich parallel zur Signalisierung am ersten Telekommunikationsendgerät (21) auch an wenigstens einem zweiten, einer Parallelrufnummer (202) zugeordneten, Telekommunikationsendgerät (22) signalisiert wird
-- oder eine Signalisierung anstelle einer Signalisierung an einem ersten, der Referenzrufnummer (201) zugeordneten, Telekommunikationsendgerät (21) an wenigstens einem zweiten, der Parallelrufnummer (202) zugeordneten, Telekommunikationsendgerät (22) signalisiert wird,
wobei eine Aktivierung der zielrufnummernbezogenen Funktionalität bezüglich des zweiten Telekommunikationsendgeräts (22) und/oder bezüglich der Parallelrufnummer (202) mittels eines Aktivierungsschritts dadurch erfolgt, dass der Dienstverwaltungsschnittstelle (11)
-- die Referenzrufnummer (201),
-- die Parallelrufnummer (202) und
-- eine Authentisierungsinformation (210)
übermittelt wird, **dadurch gekennzeichnet, dass** zeitlich vor der Durchführung des Aktivierungsschritts mittels eines Vorbereitungsschritts die Aktivierbarkeit der zielrufnummernbezogenen Funktionalität bezüglich der Referenzrufnummer (201) eingerichtet wird, wobei während des Vorbereitungsschritts die Authentisierungsinformation (210) mittels der Dienstverwaltungsschnittstelle (11) generiert wird.

2. Verfahren nach Anspruch 1, **dadurch gekennzeichnet, dass** zur Aktivierung der zielrufnummernbezogenen Funktionalität bezüglich des zweiten Telekommunikationsendgeräts (22) und/oder bezüglich der Parallelrufnummer (202) - neben einer Befehlsinformation - genau die Referenzrufnummer (201), die Parallelrufnummer (202) und die Authentisierungsinformation zur Dienstverwaltungsschnittstelle (11) übertragen werden.

3. Verfahren nach einem der vorhergehenden Ansprüche, **dadurch gekennzeichnet, dass** die Aktivierung der zielrufnummernbezogenen Funktionalität bezüglich des zweiten Telekommunikationsendgeräts (22) bei der Dienstverwaltungsschnittstelle (11) ausschließlich vom zweiten Telekommunikationsendgerät (22) aus erfolgt.

4. Verfahren nach Anspruch 3, **dadurch gekennzeichnet, dass** die Parallelrufnummer (202) durch eine CLIP-Funktionalität (Übermittlung der Rufnummer/Rufnummernanzeige, Calling Line Identification Presentation) des zweiten Telekommunikationsendgeräts übertragen wird.

5. Verfahren nach einem der vorhergehenden Ansprüche, **dadurch gekennzeichnet, dass** der Aktivierungsschritt mittels des zweiten Telekommunikationsendgeräts (22) und über ein Sprachdialogsystem (IVR, Interactive Voice Response System) durchgeführt wird.

6. Verfahren nach einem der vorhergehenden Ansprüche, **dadurch gekennzeichnet, dass** der Vorbereitungsschritt
-- mittels des ersten Telekommunikationsendgeräts (21) erfolgt oder
-- mittels einer Datenverbindung zur Dienstverwaltungsschnittstelle (11) zur Konfiguration der zielrufnummernbezogenen Funktionalität.

7. Verfahren nach einem der vorhergehenden Ansprüche, **dadurch gekennzeichnet, dass** die Deaktivierung der zielrufnummernbezogenen Funktionalität bezüglich einerseits der Referenzrufnummer (201) und bezüglich andererseits des zweiten Telekommunikationsendgeräts (22) und/oder der Parallelrufnummer (202) mittels eines Deaktivierungsschritts dadurch erfolgt, dass der Dienstverwaltungsschnittstelle (11)
-- die Referenzrufnummer (201) und
-- eine Authentisierungsinformation (210)
übermittelt wird.

8. System zur Konfiguration einer zielrufnummernbezogenen Funktionalität eines Telekommunikationsnetzes (10) mittels einer Dienstverwaltungsschnittstelle (11) des Telekommunikationsnetzes (10),
wobei das System derart konfiguriert ist, dass durch die zielrufnummernbezogene Funktionalität im Falle eines an eine Referenzrufnummer (201) des Telekommunikationsnetzes (10) adressierten Rufs (100) eine Signalisierung außer an einem ersten, der Referenzrufnummer (201) zugeordneten, Telekommunikationsendgerät (21) zusätzlich und zeitlich parallel zur Signalisierung am ersten Telekommunikationsendgerät (21) auch an wenigstens einem zweiten, einer Parallelrufnummer (202) zugeordneten, Telekommunikationsendgerät (22) signalisiert wird,
wobei das System derart konfiguriert ist, dass eine Aktivierung der zielrufnummernbezogenen Funktionalität bezüglich des zweiten Telekommunikationsendgeräts (22) und/oder bezüglich der Parallelrufnummer (202) mittels eines Aktivierungsschritts dadurch erfolgt, dass der Dienstverwaltungsschnittstelle (11)
-- die Referenzrufnummer (201),
-- die Parallelrufnummer (202) und
-- eine Authentisierungsinformation (210)
übermittelt wird, **dadurch gekennzeichnet, dass** das System derart konfiguriert ist, dass zeitlich vor der Durchführung des Aktivierungsschritts mittels eines Vorbereitungsschritts die Aktivierbarkeit der zielrufnummernbezogenen Funktionalität bezüglich der Referenzrufnummer (201) eingerichtet wird, wobei während des Vorbereitungsschritts die Authentisierungsinformation (210) mittels der Dienstverwaltungsschnittstelle (11) generiert wird.

9. System nach Anspruch 8, **dadurch gekennzeichnet, dass** das System derart konfiguriert ist, dass zur Aktivierung der zielrufnummernbezogenen Funktionalität bezüglich des zweiten Telekommunikationsendgeräts (22) und/oder bezüglich der Parallelrufnummer (202) - neben einer Befehlsinformation - genau die Referenzrufnummer (201), die Parallelrufnummer (202) und die Authentisierungsinformation zur Dienstverwaltungsschnittstelle (11) übertragen werden.

10. System nach einem der Ansprüche 8 oder 9, **dadurch gekennzeichnet, dass** das System derart konfiguriert ist, dass die Aktivierung der zielrufnummernbezogenen Funktionalität bezüglich des zweiten Telekommunikationsendgeräts (22) bei der Dienstverwaltungsschnittstelle (11) ausschließlich vom zweiten Telekommunikationsendgerät (22) aus erfolgt.

11. System nach einem der Ansprüche 8, 9 oder 10, **dadurch gekennzeichnet, dass** das System derart konfiguriert ist, dass der Aktivierungsschritt mittels des zweiten Telekommunikationsendgeräts (22) und über ein Sprachdialogsystem (IVR, Interactive Voice Response System) durchgeführt wird.

12. Computerprogramm mit Programmcodemitteln, mit deren Hilfe alle Schritte eines Verfahrens nach einem der Ansprüche 1 bis 7 durchführbar sind, wenn das Computerprogramm auf einer programmierbaren Einrichtung, insbesondere auf einem Netzelement des Telekommunikationsnetzes (10), ausgeführt wird.

13. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 7 durchführbar sind, wenn das Computerprogramm auf einer programmierbaren Einrichtung, insbesondere auf einem Netzelement des Telekommunikationsnetzes (10), ausgeführt wird.

## Claims

1. Method for configuring a target calling line functionality of a telecommunications network (10) by means of a service management interface (11) of the telecommunications network (10),
in which, by means of the target calling line functionality, in the event of a call (100) addressed to a reference calling line (201),
- either, as well as signalling at a first telecommunications terminal (21) associated with the reference calling line (201), there is also signalling at at least one second telecommunications terminal (22) associated with a parallel calling line (202), in addition to and temporally in parallel with the signalling at the first telecommunications terminal (21),
- or, instead of signalling at a first telecommunications terminal (21) associated with the reference calling line (201), there is signalling to at least one second telecommunications terminal (22) associated with the parallel calling line (202),
the target calling line functionality for the second telecommunications terminal (22) and/or for the parallel calling line (202) being activated by means of an activation step, in that
- the reference calling line (201),
- the parallel calling line (202) and
- authentication information (210)
are conveyed to the service management interface (11), **characterised in that**, temporally before the activation step is carried out, the target calling line functionality for the reference calling line (201) is set up to be activatable by means of a preparation step, the authentication information (210) being generated by means of the service management interface (11) during the preparation step.

2. Method according to claim 1, **characterised in that** to activate the target calling line functionality for the second telecommunications terminal (22) and/or for the parallel calling line (202) - aside from command information - precisely the reference calling line (201), the parallel calling line (202) and the authentication information are transmitted to the service management interface (11).

3. Method according to either of the preceding claims, **characterised in that** the target calling line functionality for the second telecommunications terminal (22) at the service management interface (11) is activated exclusively from the second telecommunications terminal (22).

4. Method according to claim 3, **characterised in that** the parallel calling line (202) is transmitted by means of a CLIP (calling line identification presentation) functionality of the second telecommunications terminal.

5. Method according to any of the preceding claims, **characterised in that** the activation step is carried out by means of the second telecommunications terminal (22) and via a speech dialogue system (IVR, interactive voice response system).

6. Method according to any of the preceding claims, **characterised in that** the preparation step takes place
- by means of the first telecommunications terminal (21) or
- by means of a data connection to the service management interface (11) for configuring the target calling line functionality.

7. Method according to any of the preceding claims, **characterised in that** the calling line functionality for the reference calling line (201) on the one hand and for the second telecommunications terminal (22) and/or the parallel calling line (202) on the other hand is deactivated by means of a deactivation step, **in that**
- the reference calling line (201) and
- authentication information (210)
are conveyed to the service management interface (11).

8. System for configuring a target calling line functionality of a telecommunications network (10) by means of a service management interface (11) of the telecommunications network (10),
the system being configured in such a way that, by means of the target calling line functionality, in the event of a call (100) addressed to a reference calling line (201), as well as signalling at a first telecommunications terminal (21) associated with the reference calling line (201), there is also signalling at at least one second telecommunications terminal (22) associated with a parallel calling line (202), in addition to and temporally in parallel with the signalling at the first telecommunications terminal (21),
the system being configured in such a way that the target calling line functionality for the second telecommunications terminal (22) and/or for the parallel calling line (202) is activated by means of an activation step, in that
- the reference calling line (201),
- the parallel calling line (202) and
- authentication information (210)
are conveyed to the service management interface (11), **characterised in that** the system is configured in such a way that, temporally before the activation step is carried out, the target calling line functionality for the reference calling line (201) is set up to be activatable by means of a preparation step, the authentication information (210) being generated by means of the service management interface (11) during the preparation step.

9. System according to claim 8, **characterised in that** the system is configured in such a way that to activate the target calling line functionality for the second telecommunications terminal (22) and/or for the parallel calling line (202) - aside from command information - precisely the reference calling line (201), the parallel calling line (202) and the authentication information are transmitted to the service management interface (11).

10. System according to either claim 8 or claim 9, **characterised in that** the system is configured in such a way that the target calling line functionality for the second telecommunications terminal (22) at the service management interface (11) is activated exclusively from the second telecommunications terminal (22).

11. System according to any of claims 8, 9 and 10, **characterised in that** the system is configured in such a way that the activation step is carried out by means of the second telecommunications terminal (22) and via a speech dialogue system (IVR, interactive voice response system).

12. Computer program comprising program coding means by means of which all steps of a method according to any of claims 1 to 7 can be carried out when the computer program is run on a programmable device, in particular on a network element of the telecommunications network (10).

13. Computer program product comprising a computer-readable medium and a computer program stored on the computer-readable medium and comprising program coding means suitable such that all steps of a method according to any of claims 1 to 7 can be carried out when the computer program is run on a programmable device, in particular on a network element of the telecommunications network (10).

## Revendications

1. Procédé de configuration d'une fonctionnalité relative à un numéro de destinataire d'un réseau de télécommunications (10) au moyen d'une interface de gestion de service (11) du réseau de télécommunications (10),
dans lequel, en raison de la fonctionnalité relative à un numéro de destinataire, dans le cas d'un appel (100) adressé à un numéro de référence (201),
- soit une signalisation est signalée, sauf à un premier terminal de télécommunication (21) attribué au numéro d'appel de référence (201), en plus et temporellement parallèlement à la signalisation sur le premier terminal de télécommunication (21), également à au moins un deuxième terminal de télécommunication (22) attribué à un deuxième numéro d'appel parallèle (202)
- soit une signalisation est signalée, au lieu d'une signalisation sur un premier terminal de télécommunication (21) attribué au numéro d'appel de référence (201), à au moins un deuxième terminal de télécommunication (22) attribué au numéro d'appel parallèle (202),
dans lequel une activation de la fonctionnalité relative à un numéro de destinataire, relative au deuxième terminal de télécommunication (22) et/ou relative au numéro d'appel parallèle (202), est réalisée au moyen d'une étape d'activation du fait que
- le numéro d'appel de référence (201),
- le numéro d'appel parallèle (202) et
- une information d'authentification (210)
sont transmis à l'interface de gestion de service (11), **caractérisé en ce que**, temporellement avant la réalisation de l'étape d'activation, la possibilité d'activation de la fonctionnalité relative à un numéro de destinataire relative au numéro d'appel de référence (201) est configurée au moyen d'une étape de préparation, l'information d'authentification (210) étant générée pendant l'étape de préparation au moyen de l'interface de gestion de service (11).

2. Procédé selon la revendication 1, **caractérisé en ce que** pour l'activation de la fonctionnalité relative à un numéro de destinataire relative au deuxième terminal de télécommunication (22) et/ou relative au numéro d'appel parallèle (202) - outre une information d'instruction - précisément le numéro d'appel de référence (201), le numéro d'appel parallèle (202) et l'information d'authentification sont transmis vers l'interface de gestion de service (11).

3. Procédé selon l'une quelconque des revendications précédentes, **caractérisé en ce que** l'activation de la fonctionnalité relative à un numéro de destinataire relative au deuxième terminal de télécommunication (22) est réalisée exclusivement à partir du deuxième terminal de télécommunication (22) dans l'interface de gestion de service (11).

4. Procédé selon la revendication 3, **caractérisé en ce que** le numéro d'appel parallèle (202) est transmis par une fonctionnalité CLIP (transmission du numéro d'appel/affichage du numéro d'appel, *Calling Line Identification Présentation*) du deuxième terminal de télécommunication.

5. Procédé selon l'une quelconque des revendications précédentes, **caractérisé en ce que** l'étape d'activation est réalisée au moyen du deuxième terminal de télécommunication (22) et par l'intermédiaire d'un système de dialogue vocal (IVR, *Interactive Voice Response System).*

6. Procédé selon l'une quelconque des revendications précédentes, **caractérisé en ce que** l'étape de préparation est réalisée
- au moyen du premier terminal de télécommunication (21) ou
- au moyen d'une liaison de données vers l'interface de gestion de service (11) pour la configuration de la fonctionnalité relative à un numéro de destinataire.

7. Procédé selon l'une quelconque des revendications précédentes, **caractérisé en ce que** la désactivation de la fonctionnalité relative à un numéro de destinataire relative, d'une part, au numéro d'appel de référence (201) et relative, d'autre part, au deuxième terminal de télécommunication (22) et/ou le numéro d'appel parallèle (202) est réalisée au moyen d'une étape de désactivation du fait que
- le numéro d'appel de référence (201) et
- une information d'authentification (210)
sont transmis à l'interface de gestion de service (11).

8. Système destiné à la configuration d'une fonctionnalité relative à un numéro de destinataire d'un réseau de télécommunications (10) au moyen d'une interface de gestion de service (11) du réseau de télécommunications (10),
dans lequel le système est configuré de manière à ce qu'en raison de la fonctionnalité relative à un numéro de destinataire, dans le cas d'un appel (100) adressé à un numéro d'appel de référence (201) du réseau de télécommunications (10), une signalisation soit signalée, sauf à un premier terminal de télécommunication (21) attribué au numéro d'appel de référence (201), en plus et temporellement parallèlement à la signalisation sur le premier terminal de télécommunication (21), également à au moins un deuxième terminal de télécommunication (22) attribué à un deuxième numéro d'appel parallèle (202), dans lequel le système est configuré de manière à ce qu'une activation de la fonctionnalité relative à un numéro de destinataire, relative au deuxième terminal de télécommunication (22) et/ou relative au numéro d'appel parallèle (202), soit réalisée au moyen d'une étape d'activation du fait que
- le numéro d'appel de référence (201),
- le numéro d'appel parallèle (202) et
- une information d'authentification (210)
sont transmis à l'interface de gestion de service (11), **caractérisé en ce que** le système est configuré de manière à ce que temporellement avant la réalisation de l'étape d'activation, la possibilité d'activation de la fonctionnalité relative à un numéro de destinataire relative au numéro d'appel de référence (201) soit configurée au moyen d'une étape de préparation, l'information d'authentification (210) étant générée pendant l'étape de préparation au moyen de l'interface de gestion de service (11).

9. Système selon la revendication 8, **caractérisé en ce que** le système est configuré de manière à ce que pour l'activation de la fonctionnalité relative à un numéro de destinataire relative au deuxième terminal de télécommunication (22) et/ou relative au numéro d'appel parallèle (202) - outre une information d'instruction - précisément le numéro d'appel de référence (201), le numéro d'appel parallèle (202) et l'information d'authentification soient transmis vers l'interface de gestion de service (11).

10. Système selon l'une quelconque des revendications 8 ou 9, **caractérisé en ce que** le système est configuré de manière à ce que l'activation de la fonctionnalité relative à un numéro de destinataire relative au deuxième terminal de télécommunication (22) soit réalisée exclusivement à partir du deuxième terminal de télécommunication (22) dans l'interface de gestion de service (11).

11. Système selon l'une quelconque des revendications 8, 9 ou 10, **caractérisé en ce que** le système est configuré de manière à ce que l'étape d'activation soit réalisée au moyen du deuxième terminal de télécommunication (22) et par l'intermédiaire d'un système de dialogue vocal (IVR, *Interactive Voice Response System).*

12. Programme informatique comprenant des moyens de codes de programmation à l'aide desquels toutes les étapes d'un procédé selon l'une quelconque des revendications 1 à 7 sont réalisables lorsque le programme informatique est exécuté sur un dispositif programmable, notamment sur un élément de réseau du réseau de télécommunications (10).

13. Produit de programme informatique comportant un support lisible par ordinateur et un programme informatique mémorisé sur le support lisible par ordinateur, comportant des moyens de codes de programmation qui sont aptes à ce que toutes les étapes d'un procédé selon l'une quelconque des revendications 1 à 7 soient réalisables lorsque le programme informatique est exécuté sur un dispositif programmable, notamment sur un élément de réseau du réseau de télécommunications (10).
